# EUROPEAN PATENT SPECIFICATION

(11) **EP 1 207 688 B1**
(45) Date of publication and mention of the grant of the patent: **24.01.2007**
(21) Application number: 01309347.1
(22) Date of filing: 05.11.2001
(51) Int. Cl.: H04N 5/44

(54) **Broadcast data receiver**
Rundfunkdatenempfänger
Récepteur de données diffusées

(30) Priority: 15.11.2000 GB 0027812
(43) Date of publication of application: 22.05.2002
(73) Proprietor: Pace Micro Technology PLC, Saltaire, Shipley, BD14 3LF (GB)
(72) Inventor: Baldock, Mark, Shipley, West Yorkshire BD18 4PE (GB)
(74) Representative: Wood, Graham

(56) References cited:
- WO-A-00/49800
- WO-A-00/64179
- GB-A- 2 326 789
- US-A- 5 699 125

## Description

This invention relates to a broadcast data receiver for use with a television system.

The television system for the purposes of the following description includes a broadcast data receiver (BDR) for receiving digital data in the form of data streams from one or more broadcasters via satellite, terrestrial or cable and generating audio, visual and/or auxiliary data therefrom. Data streams transmitted at different frequencies from the broadcaster(s) correspond to different services such as different television channels. A display screen is provided for display of the visual data and speakers are typically provided for sounding of the audio data.

An example of a service is a television channel and it will be understood by persons skilled in the art that although the following description refers to channel information, this can include two channels encoded and transported on a single channel or carrier, thus requiring only a single tuner. Alternatively, channels can be encoded on a number of different carriers, thus requiring a timer to be tuned to different RF carriers to receive different channels, tuners and/or the like.

Some BDRs are provided with multiple tuner/front ends, which allow the BDR to function using more than one data stream at any particular time. For example, the multiple tuners can allow a user to watch a particular channel which can be referred to as the primary function whilst receiving and storing data for a different channel using the BDR, which can be referred to as the secondary function.

One conventional method by which BDRs can generate a list of available channels is by "scanning" their tuner frequency bands. This procedure is typically actuated manually and, as such, if a user wishes to find out whether there are any new channels available via the BDR, the user has to periodically rescan the tuner frequency bands of the BDR to update the list. This is time consuming and is therefore undesirable. If the user does not frequently rescan the tuner frequency bands of the BDR, the user may not be aware of new channels which are available. In addition, technical support is frequently required by users for assistance on how to manually scan for new channels.

WO00/49800 and GB2326789 both disclose methods via which an off-line or idle tuner of a BDR or set top box can scan tuner frequency bands automatically and receive program information for the broadcast channel associated with a digital broadcast signal to allow an electronic program guide (EPG) provided via the BDR to be updated. However, a user is still required to regularly read the entire EPG in order to identify and be informed of the existence of new channels.

It is therefore an aim of the present invention to provide a broadcast data receiver as described in the claims which overcomes the abovementioned problems.

According to a first aspect of the present invention there is provided broadcast data receiver (BDR) for receiving digital data from one or more broadcaster(s) via satellite, terrestrial or cable transmission systems and for processing said digital data to generate video, audio and/or auxiliary data therefrom, said BDR incorporating first and second tuners, each tuner controlled to tune to a specified radio frequency to allow the BDR to receive a designated data carrier, said data carrier frequencies selected and controlled by the BDR in response to a user selection and, if said first tuner is being used to receive data to allow a known channel generated from said data to be watched and/or listened to by a user, the second tuner, if not in use to tune to a specific frequency for a particular data carrier, can be controlled to scan through the data carrier frequency bandwidth to identify and retrieve service information (SI) relating to new and/or known channels, characterized in that the channel scanning is performed in the background in the background and without requiring user initiation, periodically and/or continuously, processing means in the BDR being arranged to determine when SI relating to new, previously unidentified channels, has been detected by said second tuner and, following the detection of a new, previously unidentified channel, the background process resulting in an immediate display of a visual and/or audible message via the BDR, to inform a user of the BDR that a new, previously unidentified channel has been detected, whilst the user is watching and/or listening to said already known channel data received from said first tuner, without having initiated a channel scan process.

Preferably the service information relates to television and/or radio channel identification information comprising audio, video and/or auxiliary data.

In one embodiment the channel information obtained by the at least one tuner can relate to information for a new channel or service and/or previously identified channel or service.

In one embodiment the received service information is stored in memory means of the BDR and if a new channel or service has been identified since a previous scan, a message or symbol can be displayed visually and/or audibly to inform the user of the apparatus of the new channel or channels and/or invite the user to view the new channel(s).

Preferably if the at least one tuner is scanning for available channel information and is then required for use on a data stream, any scanning being performed by the tuner is suspended and the tuner is made available for the data stream. The scanning can be resumed when the tuner is no longer required to be in use.

In one embodiment, when a tuner is available, the scanning is performed continuously for as long as the tuner is available. Alternatively, the scanning is preformed at spaced time intervals.

An advantage of the present invention is that tuners which would normally have no working function when not required to tune to a specific data carrier frequency can be used to scan for service information. This removes the requirement for the user to remember to manually activate the BDR to scan the tuner frequency bandwidths to search for new channel information and update previously searched channel information. This in turn results in the user becoming aware of channels that they may not have previously been informed about at all or would only have been informed about when the user next manually programmed the BDR to scan for new channels. In addition, the channel information can be used to update network information tables and delete any discontinued channels.

A specific embodiment of the present invention will now be described with reference to the following drawings wherein:-
Figure 1 illustrates two BDR tuners in operation to receive specific data carriers; and
Figure 2 illustrates the BDR tuners operating in accordance with the invention..

Many broadcast data receivers are now provided with multiple tuners to allow the generation of more than one television channel by the BDR at any particular time. This allows a user, for example, to watch one channel whilst using the BDR to record a programme from a different channel, for subsequent viewing.

In accordance with the present invention, the multiple tuners are provided with dual functionality; a primary function for tuning to, locating and locking onto an incoming data stream at a particular data carrier frequency from a number of bandwidths, a secondary function, such as receiving data from another service for recording of the same which is implemented when the tuner is not being used for the primary function, and a further function which comprises background scanning of the frequency bandwidth for channel information, but this further function requires user selection before it is conventionally performed.

In the following description, the tuners are referred to as being idle when they are not being used for either the primary or secondary functions. For example, the user may be watching a channel generate from data received by a first tuner but not using the BDR to record from a different channel and thus the second tuner is idle. Alternatively, the BDR may be performing several operations but all of which are on a single data stream from a single source (i.e., using a single tuner) and thus the second tuner is idle.

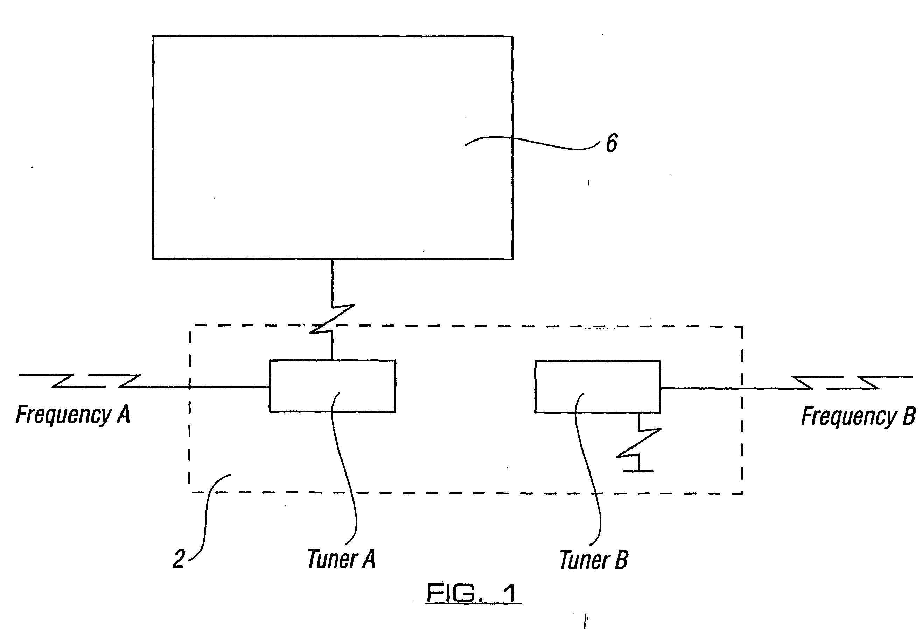

Figure 1 illustrates the BDR 2 in use with both tuners in use. Tuner A is tuned to frequency A to receive data for a programme for viewing on display screen 6. Tuner B is tuned to frequency B to receive data for storage in memory means (not shown) in the BDR 2. In this case tuners A and B are occupied.

The status of the tuner is monitored by low-level drive software of the BDR and the criteria for determining when a tuner is idle is when the software controlling the tuner has relinquished the resources of the tuner voluntarily and has not reserved the tuner for use.

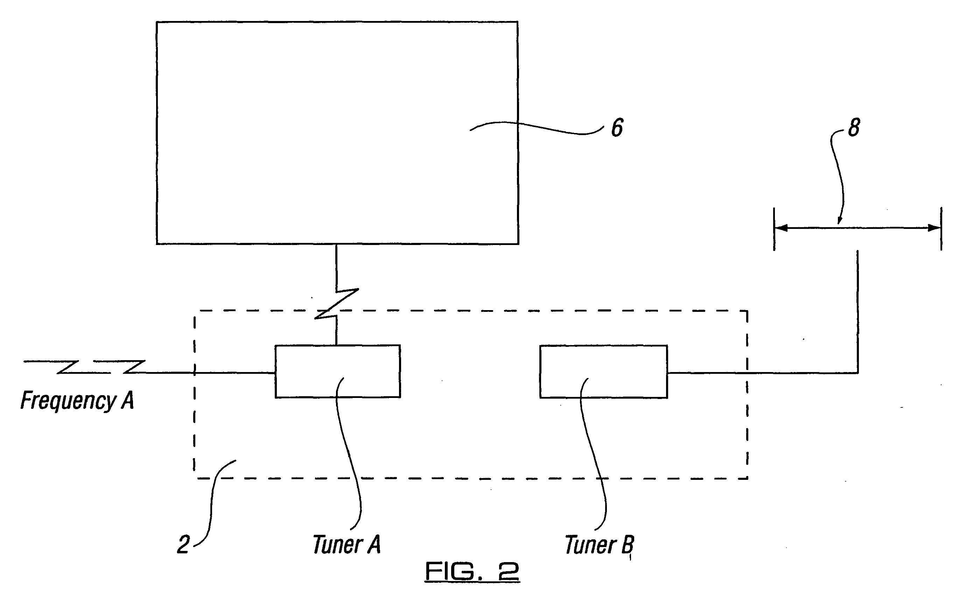

In accordance with the invention as shown in Figure 2, in this example, tuner B is identified as being idle, the tuner B is then controlled by the BDR to scan all the available tuner frequency bandwidths 8 for service information (SI) which can relate to services or television or radio channel information. Any information identified can be stored in memory means of the BDR, such that when the scan for service information is performed, the microprocessor of the BDR can determine whether any new information has been identified. The service information obtained can include the bandwidth frequency of a new channel and/or the like, so that the channel or service can be subsequently identified.

It is noted that a pre-determined period of time can be allowed to lapse following determination that a tuner is idle, before the inventive function of the tuner is initiated. This allows time for the primary or secondary functions of the tuner to be requested again, for example, as may be the case if a person is channel hopping to and from different channels. The pre-determined time period can typically defined by the broadcaster or manufacturer of the BDR.

If during the scan for information, information relating to a new channel is identified, a message or symbol 10 can be displayed on the display screen 6 and/or operated audibly by the BDR 2 to inform the user of this information. A message can also be displayed inviting the user to view the new channel or bookmark the new channel for future viewing.

New service information is identified over old service information using instream data tables in the incoming data streams, and said data derived from these tables compared with data held in the BDR memory from previous searches. If certain channels or services are no longer available as identified from the received data, the same will no longer be offered to the user and so by use of the invention, the service to the user can be updated regularly and so be current with services available.

If during the scanning of the frequency bandwidths, the tuner is required for its primary or secondary function, the function of background scanning is suspended and the tuner is made available for the primary or secondary function. As soon as the tuner returns to an idle status, the interrupted scanning can be resumed. This ensures that the tuner will eventually scan the entire bandwidth for channel information.

The background scanning can be periodic and/or continuous. It is also noted that conventional manual background scanning facilities can be still be user initiated as and when required.

The present invention is in contrast to conventional BDRs where a user is required to manually program the BDR to scan for new channels or update previous channel information.

Thus it can be seen that the present invention provides a means for identifying and updating service information using already available equipment, thereby increasing the efficiency of the broadcast data receiver, without affecting the existing usage of the tuners.

## Claims

1. A broadcast data receiver (BDR) for receiving digital data from one or more broadcasters via satellite, terrestrial or cable transmission systems and for processing said digital data to generate video, audio and/or auxiliary data therefrom, said BDR incorporating first and second tuners, each tuner controlled to tune to a specified radio frequency to allow the BDR to receive a designated data carrier, said data carrier frequencies selected and controlled by the BDR in response to a user selection and, if said first tuner is being used to receive data to allow a known channel generated from said data to be watched and/or listened to by a user, the second tuner, if not in use to tune to a specific frequency for a particular data carrier, can be controlled by a processing means in the BDR to scan through the data carrier frequency bandwidth to identify and retrieve service information (SI) relating to new and/or known channels, **characterized in that**
- said processing means is adapted to perform said channel scanning as a background process and without requiring user initiation, periodically and/or continuously,
- said processing means being arranged to determine when service information relating to new previously unidentified channels, has been detected by said second tuner and,
- said processing means being further arranged to cause said background process to immediately display a visual and/or audible message via the BDR, when a new, previously unidentified channel has been detected, to inform a user of the BDR that a new, previously unidentified channel has been detected, whilst the user is watching and/or listening to said already known channel data received from said first tuner, without having initiated a channel scan process.

2. A broadcast data receiver according to claim 1, **characterized in that** the service information for which the tuner is used to scan relates to television and/or radio channel identification information comprising audio, video and/or auxiliary data.

3. A Broadcast data receiver according to claim 1 **characterized in that** the service information retrieved by the said at least one tuner is stored in memory means of said broadcast data receiver.

4. A broadcast data receiver according to claim 1 **characterized in that** if the said at least one tuner is scanning for service information and is required to receive a designated data stream, in response to a user selection, the scanning is suspended and the tuner is made available for the data stream.

5. A broadcast data receiver according to claim 4 **characterized in that** the scanning is resumed when the tuner is no longer required to receive said data stream, and there are no other pending tuning requirements.

## Patentansprüche

1. Rundfunkdatenempfänger (BDR) zum Empfangen von digitalen Daten von einem oder mehreren Rundfunksendern über Satelliten-, terrestrische oder Kabelübertragungssysteme sowie zum Verarbeiten der genannten digitalen Daten, um Video-, Audio- und/oder Zusatzdaten davon zu erzeugen, wobei der genannte BDR einen ersten und einen zweiten Tuner beinhaltet, wobei jeder Tuner zum Einstellen auf eine vorgegebene Funkfrequenz gesteuert wird, damit der BDR einen designierten Datenträger empfangen kann, wobei die genannten Datenträgerfrequenzen von dem BDR als Reaktion auf eine Benutzerwahl gewählt und gesteuert werden und, wenn der genannte erste Tuner zum Empfangen von Daten verwendet wird, so dass ein bekannter, von den genannten Daten erzeugter Kanal von einem Benutzer betrachtet und/oder gehört werden kann, der zweite Tuner, wenn er nicht zum Einstellen auf eine bestimmte Frequenz für einen bestimmten Datenträger verwendet wird, von einem Verarbeitungsmittel im BDR zum Absuchen der Datenträgerfrequenzbreite gesteuert werden kann, um Service-Informationen (SI) über neue und/oder bekannte Kanäle zu identifizieren und abzurufen, **dadurch gekennzeichnet, dass** das genannte Verarbeitungsmittel die Aufgabe hat, die Suche in dem genannten Kanal als Hintergrundprozess durchzuführen und ohne dass eine Einleitung durch den Benutzer erforderlich ist, periodisch und/oder kontinuierlich, wobei das genannte Verarbeitungsmittel die Aufgabe hat zu ermitteln, wann Service-Informationen über neue, zuvor unidentifizierte Kanäle von dem genannten zweiten Tuner erfasst wurden, und wobei das genannte Verarbeitungsmittel ferner die Aufgabe hat, den genannten Hintergrundprozess zu veranlassen, sofort eine visuelle und/oder akustische Meldung über den BDR anzuzeigen, wenn ein neuer, zuvor unidentifizierter Kanal erfasst wurde, um einen Benutzer des BDR zu informieren, dass ein neuer, zuvor unidentifizierter Kanal erfasst wurde, während der Benutzer die genannten, von dem genannten ersten Tuner empfangenen, zuvor bereits bekannten Kanaldaten betrachtet und/oder hört, ohne einen Kanalsuchprozess eingeleitet zu haben.

2. Rundfunkdatenempfänger nach Anspruch 1, **dadurch gekennzeichnet, dass** sich die Service-Informationen, die der Tuner suchen soll, auf Femseh- und/oder Radiokanal-Identifikationsinformationen beziehen, die Audio-, Video- und/oder Zusatzdaten umfassen.

3. Rundfunkdatenempfänger nach Anspruch 1, **dadurch gekennzeichnet, dass** die von dem genannten wenigstens einen Tuner abgerufenen Service-Informationen im Speichermittel des genannten Rundfunkdatenempfängers gespeichert werden.

4. Rundfunkdatenempfänger nach Anspruch 1, **dadurch gekennzeichnet, dass**, wenn der genannte wenigstens eine Tuner nach Service-Informationen sucht und als Reaktion auf eine Benutzerwahl einen designierten Datenstrom empfangen soll, die Suche unterbrochen und der Tuner für den Datenstrom verfügbar gemacht wird.

5. Rundfunkdatenempfänger nach Anspruch 4, **dadurch gekennzeichnet, dass** die Suche wieder aufgenommen wird, wenn der Tuner den genannten Datenstrom nicht mehr zu empfangen braucht und es keine weiteren anhängigen Einstellanforderungen gibt.

## Revendications

1. Récepteur de données diffusées (RDD) servant à recevoir des données numériques à partir d'un ou de plusieurs organismes de radio et télédiffusion via des systèmes satellitaires, terrestres ou de transmission par câble, et à traiter lesdites données numériques afin de générer à partir de celles-ci des données vidéo, audio et/ou auxiliaires, ledit RDD incorporant un premier et un deuxième syntoniseurs, chaque syntoniseur étant commandé pour s'accorder sur une radiofréquence spécifiée afin de permettre au RDD de recevoir une porteuse de données désignée, lesdites fréquences de porteuse de données étant sélectionnées et commandées par le RDD en réaction à une sélection faite par un utilisateur et, si ledit premier syntoniseur est en train d'être utilisé pour recevoir des données pour permettre à un utilisateur d'écouter et/ou de visualiser un canal connu généré à partir desdites données, alors le deuxième syntoniseur - si celui-ci n'est pas utilisé pour s'accorder sur une fréquence spécifique pour une porteuse de données particulière - pourra être commandé par un moyen de traitement intégré au RDD pour effectuer un balayage de l'ensemble de la largeur de bande de la fréquence de la porteuse de données afin d'identifier et de récupérer des informations de service (IS) relatives à de nouveaux canaux et/ou des canaux connus, **caractérisé en ce que** ledit moyen de traitement est adapté de façon à effectuer ledit balayage des canaux en tant que processus d'arrière-plan, et ceci sans nécessiter une activation de la part de l'utilisateur, que ce soit sur une base périodique et/ou continue, ledit moyen de traitement étant agencé de façon à déterminer le moment auquel les informations de service relatives à de nouveaux canaux, n'ayant pas été identifiés précédemment, ont été détectées par ledit deuxième syntoniseur, et ledit moyen de traitement étant agencé en outre de façon à obliger ledit processus d'arrière-plan à produire immédiatement un message audible et/ou visuel via le RDD, lorsqu'un nouveau canal n'ayant pas été identifié précédemment a été détecté, afin d'informer un utilisateur du RDD du fait qu'un nouveau canal n'ayant pas été identifié précédemment, a été détecté alors que l'utilisateur est en train de visionner et/ou d'écouter lesdites données de canal déjà connu en provenance dudit premier syntoniseur, sans avoir amorcé un processus de balayage des canaux.

2. Récepteur de données diffusées, selon la revendication 1, **caractérisé en ce que** les informations de service, pour lesquelles le syntoniseur est utilisé pour effectuer le balayage, se rapportent à des informations d'identification de canal de télévision et/ou de radio comportant des données audio, vidéo et/ou auxiliaires.

3. Récepteur de données diffusées, selon la revendication 1, **caractérisé en ce que** les informations de service, récupérées par ledit au moins un syntoniseur, sont enregistrées dans les moyens à mémoire dudit récepteur de données diffusées.

4. Récepteur de données diffusées, selon la revendication 1, **caractérisé en ce que** si ledit au moins un syntoniseur est en train d'effectuer un balayage pour des informations de service, et qu'il doit recevoir un flux de données désigné, en réaction à une sélection faite par l'utilisateur, l'opération de balayage sera alors suspendue et le syntoniseur sera mis à la disposition du flux de données.

5. Récepteur de données diffusées, selon la revendication 4, **caractérisé en ce que** l'opération de balayage reprend lorsque le syntoniseur n'est plus obligé de recevoir ledit flux de données, et qu'il n'existe pas d'autres demandes de syntonisation en suspens.
